**Europäisches Patentamt**

**European Patent Office**

**Office européen des brevets**

(19)

(11) Numéro de publication: **0 122 180**
**A1**

# DEMANDE DE BREVET EUROPEEN

(12)

(21) Numéro de dépôt: 84400515.7

(22) Date de dépôt: 14.03.84

(51) Int. Cl.³: **B 01 J 21/04**, C 10 G 65/04,
C 10 G 45/04, B 01 J 37/20,
B 01 J 35/10

(30) Priorité: 15.03.83 FR 8304205

(43) Date de publication de la demande: 17.10.84
Bulletin 84/42

(84) Etats contractants désignés: **BE DE FR GB IT NL**

(71) Demandeur: **COMPAGNIE FRANCAISE DE RAFFINAGE
Société anonyme dite:, 5, rue Michel-Ange,
F-75781 Paris Cedex 16 (FR)**

(72) Inventeur: **Devanneaux, Jacques, 5, rue du Dauphiné,
F-76290 Montivilliers (FR)**
Inventeur: **Lafforgue, Didier, 89, rue David d'Angers,
F-76620 Le Havre (FR)**
Inventeur: **Gallez, Jean-Paul, 100 aux Prêtres Parc
d'Anxtot, F-76210 Bolbec (FR)**
Inventeur: **Courcelle, Jean-Claude, Hameau de la
Payennière, F-76290 Montivilliers (FR)**

(74) Mandataire: **Jolly, Jean-Pierre et al, Cabinet BROT et
JOLLY 83, rue d'Amsterdam, F-75008 Paris (FR)**

(54) Procédé d'hydrotraitement de charges d'hydrocarbures et catalyseur pour la mise en oeuvre de ce procédé.

(57) Selon l'invention, la charge à traiter est mise en contact, dans les conditions usuelles d'hydrotraitement avec un catalyseur constitué essentiellement par une alumine dont les caractéristiques sont les suivantes:
— surface spécifique: supérieure à 150 m²/g,
— volume poreux: supérieur à 0,6 cm³/g,
— distribution du volume poreux en fonction du rayon de pore: au moins 50% de pores de rayon au plus égal à 100 Å et moins de 10% de pores de rayon supérieur ou égal à 1000 Å.
— mode de distribution des rayons de pores en Å (maximum de la courbe de distribution des rayons de pores): rayons compris entre 40 et 70,
ladite alumine ayant été activée préalablement à la mise en oeuvre dudit procédé, pendant une période initiale d'activation, et étant éventuellement activée pendant ledit procédé, à l'aide d'un composé soufré.

EP 0 122 180 A1

Procédé d'hydrotraitement de charges d'hydrocarbures et catalyseur pour la mise en oeuvre de ce procédé

La présente invention concerne un procédé d'hydrotraitement et plus particulièrement d'hydrodémétallisation de charges d'hydrocarbures. Elle concerne également un catalyseur d'hydrotraitement utilisable pour la mise en oeuvre de ce procédé.

Les charges d'hydrocarbures lourdes, telles que les pétroles bruts, les résidus de distillation desdits pétroles bruts ou les charges provenant du charbon, par exemple, contiennent des composés organométalliques, notamment de nickel et de vanadium. Ces métaux sont des poisons des catalyseurs utilisés dans les procédés de traitement catalytique de ces charges, tels que les procédés d'hydrodésulfuration ou de craquage catalytique.

Préalablement à ces traitements catalytiques, il convient donc de faire subir à ces charges un hydrotraitement en vue notamment de les démétalliser aussi complètement que possible.

Pour réaliser cette démétallisation, on a proposé d'utiliser de la bauxite (voir brevet US n° 2 687 985), de l'alumine (voir brevets US n° 3 901 792 et FR n° 2 357 635).

Le brevet français n° 2 357 635 concerne ainsi un procédé pour démétalliser des huiles d'hydrocarbures, caractérisé en ce qu'une huile d'hydrocarbures ayant une teneur totale en vanadium et en nickel de plus de 500 ppm en poids est mise en contact, à une température et pression élevées et en présence d'hydrogène, avec un catalyseur constitué notamment par une alumine sulfurée.

On a également proposer d'utiliser de l'alumine sur laquelle est déposé au moins un métal des Groupes VI et VIII de la classification périodique des éléments.

Le brevet français n° 2 400 953 décrit ainsi un catalyseur de démétallisation contenant de 0,5 à 3 % en poids d'oxyde de molybdène, ce métal étant destiné à diminuer le temps nécessaire pour obtenir une activité démétallisante optimale. En effet, lorsque l'on utilise des alumines sur lesquelles ne sont pas déposés des métaux, la période de mise en régime est longue et leur utilisation n'est pas concevable sur le plan industriel.

Ce type de catalyseur présente la caractéristique d'être initialement très actif. De ce fait, il est possible que les métaux présents dans la charge se concentrent principalement à l'entrée du réacteur de démétallisation et créent une perte de charge qui peut à terme obliger à l'arrêt prématuré de l'unité.

Au cours de ses recherches sur les catalyseurs de démétallisation de charges d'hydrocarbures, la Demanderesse a découvert que des alumines présulfurées, entrant dans la définition très large du brevet français n° 2 357 635, sont de très bons catalyseurs de démétallisation. Ces alumines possèdent un ensemble de propriétés qui n'est pas décrit de façon précise dans le brevet français n° 2 357 635. En outre, ces alumines permettent également la démétallisation de charges d'hydrocarbures ayant une teneur totale en vanadium et en nickel inférieure à 500 ppm. De plus, le pouvoir de rétention - c'est-à-dire le poids en grammes de métaux (vanadium et nickel) pour 100 grammes d'alumine chargée au départ dans l'unité - des alumines utilisées par la Demanderesse  est très supérieur à celui des alumines décrites dans le brevet français n° 2 357 635.

Le but de la présente invention est donc une démétallisation efficace de charges d'hydrocarbures.

A cet effet, l'invention a pour objet un procédé d'hydrotraitement, et notamment d'hydrodémétallisation, d'une charge d'hydrocarbures, caractérisé en ce que, dans des conditions usuelles d'hydrotraitement, ladite charge est mise en contact avec un catalyseur constitué essentiellement par une alumine dont les caractéristiques sont les suivantes:

- surface spécifique: supérieure à 150 m²/g et, de préférence, à 175 m²/g,

- volume poreux: supérieur à 0,6 cm³/g et, de préférence, à 0,7 cm³/g,

- distribution du volume poreux en fonction du rayon de pore: au moins 50 % de pores de rayon au plus égal à 100 Å, et moins de 10 % de pores de rayon supérieur ou égal à 1000 Å,

- mode de distribution des rayons de pores en Å (maximum de la courbe de distribution des rayons de pores): rayons compris entre 40 et 70 Å,

ladite alumine ayant été activée préalablement à la mise en oeuvre dudit procédé pendant une période initiale d'activation et étant éventuellement activée pendant ledit procédé à l'aide d'un composé soufré.

Dans cet objet de l'invention et dans la suite de la présente description, on entend, par activation, le fait de conférer à l'alumine, par un traitement à l'aide d'un composé soufré, des propriétés, notamment démétallisantes, qu'elle ne possède pas sans ledit traitement.

La période d'activation est le temps nécessaire pour parvenir, pour les conditions opératoires et pour la charge utilisées, à un palier d'activité.

L'invention a également pour objet un catalyseur d'hydrotraitement de charges d'hydrocarbures utilisable dans le procédé d'hydrotraitement qui vient d'être défini, caractérisé en ce qu'il est constitué essentiellement par une
alumine dont les caractéristiques sont les suivantes:

- surface spécifique: supérieure à 150 $m^2$/g et, de préférence, à 175 $m^2$/g,

- volume poreux: supérieur à 0,6$cm^3$/g et, de préférence, à
0,7 $cm^3$/g,

- distribution du volume poreux en fonction du rayon de
pore: au moins 50 % de pores de rayon au plus égal à 100 $\overset{o}{A}$,
et moins de 10 % de pores de rayon supérieur ou égal à
1000 $\overset{o}{A}$,

- mode de distribution des rayons de pores en $\overset{o}{A}$ (maximum de
la courbe de distribution des rayons de pores): rayons compris entre 40 et 70 $\overset{o}{A}$,

ladite alumine ayant été activée préalablement à la mise
en oeuvre dudit hydrotraitement pendant une période initiale d'activation et étant éventuellement activée pendant
ledit procédé à l'aide d'un composé soufré.

Dans le procédé d'hydrotraitement selon l'invention, l'alumine est dans tous les cas activée pendant une période initiale d'activation, et éventuellement activée pendant cet
hydrotraitement, notamment si l'activité de l'alumine est
jugée insuffisante.

L'activation peut être effectuée en mettant en contact
l'alumine avec de l'hydrogène sulfuré.

Celui-ci peut:
a) soit provenir d'une source extérieure,

b) soit provenir d'une réaction de désulfuration de la
charge effectuée en combinaison avec l'hydrotraitement,

c) soit être généré in situ par décomposition d'un composé soufré ajouté à la charge, **par exemple par décomposition de** diméthyldisulfure,

d) soit être généré in situ par décomposition d'autres composés soufrés présents dans la charge.

Dans le cas b), l'alumine utilisée peut être employée en combinaison avec un catalyseur de désulfuration classique, tel que ceux comprenant un support réfractaire à base d'alumine, sur lequel ont été déposés des composés des métaux des Groupes VI et VIII des éléments de la classification périodique.

L'alumine constituant le catalyseur d'hydrotraitement peut être chargée dans un réacteur classique d'hydrotraitement, dont elle occupe la partie aval. La partie amont est occupée par le catalyseur de désulfuration, dont le rôle est alors d'engendrer de l'hydrogène sulfuré apte à activer l'alumine.

Le catalyseur de désulfuration peut être également mélangé avec l'alumine.

L'alumine constituant le catalyseur d'hydrotraitement peut être également chargée dans un premier réacteur d'un train de plusieurs réacteurs, dont les autres réacteurs contiennent un catalyseur d'hydrodésulfuration. Le rôle du premier réacteur est d'éliminer les métaux de la charge et d'empêcher l'empoisonnement du catalyseur d'hydrodésulfuration. Au moins une fraction du gaz issu du train de réacteurs, riche en hydrogène sulfuré, est recyclée vers l'entrée du premier réacteur afin d'activer l'alumine, pendant tout ou partie de la durée du cycle de l'hydrotraitement.

La façon préférée de mettre en oeuvre le procédé, parce que la plus simple, est celle où l'activation de l'alumine est effectuée par mise en contact avec de l'hydrogène

- 6 -

0122180

sulfuré engendré in situ par décomposition de composés
soufrés présents dans la charge. La Demanderesse a en
effet découvert que la quantité d'hydrogène sulfuré nécessaire pour amorcer la réaction d'hydrotraitement est faible.
Elle a par la suite établi qu'il est possible de générer
l'hydrogène sulfuré nécessaire à l'activation de l'alumine
in situ à partir des composés soufrés présents dans la charge
en utilisant le pouvoir infime, mais suffisant, de désulfuration de l'alumine.

L'alumine selon l'invention peut être utilisée pour l'hydrodémétallisation d'une charge d'hydrocarbures.

La Demanderesse attribue les propriétés démétallisantes de
l'alumine soufrée au fait que, dans la période initiale
d'activation, il se forme sur l'alumine des sulfures, principalement de vanadium, qui sont les phases actives.

Pendant cette période initiale d'activation, l'activité
démétallisante augmente progressivement jusqu'à atteindre
un équilibre stable. Le taux de démétallisation à l'équilibre, c'est-à-dire le pourcentage en poids de métaux éliminés de la charge, et la durée de la période d'activation,
sont fonction des conditions opératoires (température,
pression, débit de liquide, rapport $\frac{gaz}{charge}$). La durée de
la période initiale d'activation est inversement proportionnelle à la teneur en métaux de la charge.

L'intérêt du catalyseur selon l'invention est que la réaction de démétallisation s'amorce lentement, ce qui permet
une répartition homogène des métaux dans le lit d'alumine.
L'utilisation du catalyseur selon l'invention évite l'inconvénient précédemment signalé de la concentration des
métaux à l'entrée du réacteur, qui peut se produire avec
un catalyseur trop actif comme une alumine sur laquelle
est déposée une faible quantité d'oxyde de molybdène (voir
brevet français n° 2 400 953, cité précédemment).

Pendant la période initiale d'activation, l'effluent sortant du réacteur d'hydrotraitement, débarrassé insuffisamment de ses métaux, peut être recyclé comme charge du réacteur.

Il est également possible, pendant cette période initiale d'activation, d'utiliser une charge très polluée en métaux, pour réduire la durée de la période d'activation, et de recycler l'effluent, puis de traiter une charge moins polluée, quand l'équilibre de démétallisation est atteint.

Il est cependant possible, lors de la période initiale d'activation, de ne pas recycler l'effluent sortant du réacteur. C'est le cas, par exemple, quand les conditions opératoires (température notamment) sont telles que la durée de la période initiale d'activation est courte et que l'activité d'un catalyseur de désulfuration utilisé en aval du réacteur de démétallisation ne soit pas affectée.

En plus de ses propriétés démétallisantes, l'alumine utilisée comme catalyseur, dans le procédé selon l'invention, possède des propriétés tout à fait significatives:

- de conversion des hydrocarbures,
- de réduction de la teneur en asphaltènes de la charge,
- de réduction du résidu Conradson de la charge,
- de réduction de la teneur en soufre de la charge.

L'ensemble de ces propriétés permet d'utiliser le procédé selon l'invention:

1) en combinaison avec un procédé de désulfuration, le procédé selon l'invention étant utilisé dans une première étape,

2) comme procédé non seulement de démétallisation, mais de démétallisation et de réduction de résidu Conradson, pour la préparation de charges d'unités de craquage catalytique en lit fluide,

- 8 -

0122180

3) comme procédé de démétallisation convertissante pour la production de coupes intermédiaires: essence, gazole notamment.

Le procédé d'hydrotraitement selon l'invention peut s'appliquer notamment à l'hydrodémétallisation de charges d'hydrocarbures lourdes comme, par exemple, des résidus de distillation du pétrole brut, ou d'huile désasphaltée provenant du désasphaltage au solvant d'un tel résidu, et dont les caractéristiques, citées à titre non limitatif, peuvent être les suivantes:

- masse volumique à 15°C (mesurée selon
la norme AFNOR NFT 60-101)  : > 800 kg/$m^3$,

- viscosité à 100°C (mesurée selon
la norme AFNOR NFT 60-100)  : > 10 centistokes,

- résidu Conradson (mesuré selon
la norme AFNOR NFT 60-116)  : > 0,1 % en poids,

- teneur en soufre
(mesurée par fluorescence X)  : > 1 % en poids,

- teneur en vanadium + nickel
(mesurée par fluorescence X)  : > 10 p.p.m.

Les conditions opératoires dans lesquelles est effectuée l'hydrodémétallisation sont des conditions usuelles telles que les suivantes:

- température comprise entre 350 et 450°C,
- pression comprise entre 50 et 200 bar,
- rapport volumique $\dfrac{\text{hydrogène}}{\text{hydrocarbures}}$ compris entre 100 et 5000 normaux litres/litre,

- vitesse spatiale horaire de la charge (volume de liquide passant par heure sur une unité de volume de catalyseur) comprise entre 0,2 et 5.

Les exemples qui suivent sont destinés à illustrer l'invention de façon non limitative.

Les quatre figures annexées seront explicitées au cours de la description de ces exemples, qui concernent l'utilisation d'une alumine A selon l'invention, d'alumines T1, T2, T3, T4, T5, T6 et T7 et d'un catalyseur C, pour l'hydrotraitement de trois charges:

- la charge 1 est constituée par le résidu de la distillation à pression réduite d'un résidu de distillation sous pression atmosphérique d'un pétrole brut d'origine "KIRKOUK"

- la charge 2 est constituée par l'huile obtenue par désasphaltage au solvant lourd d'un résidu de la distillation sous pression atmosphérique d'un pétrole brut d'origine "BOSCAN",

- la charge 3 est constituée par le résidu de la distillation sous pression atmosphérique d'un pétrole brut d'origine "BOSCAN".

Les caractéristiques de ces charges sont données dans le tableau I ci-après.

TABLEAU   I

| CARACTERISTIQUES | CHARGE 1 | CHARGE 2 | CHARGE 3 |
|---|---|---|---|
| Masse volumique à 15°C en kg/m$^3$ | 1025 | 920 | 1044 |
| Viscosité à 100°C en centistokes | 890 | 155 | 5000 |
| Résidu Conradson en % en poids | 18 | 10,5 | 20,2 |
| Teneur en asphaltènes en % en poids | 7 | <0,05 | 20,7 |
| Teneur en soufre en % en poids | 5 | 5,3 | 5,6 |
| Teneur en vanadium en p.p.m. | 120 | 420 | 1520 |
| Teneur en nickel en p.p.m. | 55 | 38 | 133 |

L'alumine A a été préparée pour la Demanderesse par la Société AMERICAN CYANAMID.

Le catalyseur C est constitué par de l'alumine A sur laquelle est déposé 1,5 % en poids d'oxyde de molybdène Mo O$_3$.

Les caractéristiques de l'alumine A et des alumines commerciales témoins T1 à T7 sont données dans le tableau II ci-après.

## TABLEAU II

| CARACTERISTIQUES | ALUMINE | | | | | | | |
|---|---|---|---|---|---|---|---|---|
| | A | T1 | T2 | T3 | T4 | T5 | T6 | T7 |
| Surface en $m^2/g$ | 188 | 186 | 110 | 206 | 137 | 202 | 185 | 240 |
| Volume poreux total en $cm^3/g$ (V1 + V2) | 0,986 | 1,10 | 0,58 | 1,01 | 1,19 | 1,10 | 0,67 | 0,68 |
| Volume poreux constitué par des pores de rayons ⩽ 100 Å, en $cm^3/g$ (1) - V1 | 0,80 soit 81 % du total | 0,61 soit 55,6% du total | 0,343 soit 59,4% du total | 0,77 soit 76,2% du total | 0,545 soit 46 % du total | 0,735 soit 67 % du total | 0,54 soit 80,6% du total | 0,60 soit 89,6% du total |
| Volume poreux constitué par des pores de rayons > 100 Å, en $cm^3/g$ (2) - V2 | 0,186 soit 19 % du total | 0,49 soit 44,4% du total | 0,234 soit 40,6% du total | 0,24 soit 23,8% du total | 0,64 soit 54 % du total | 0,362 soit 33 % du total | 0,13 soit 19,4% du total | 0,075 soit 10,4% du total |
| Volume poreux constitué par des pores de rayons ⩾1000 Å, en $cm^3/g$ (3) | 0,029 soit 2,9% du total | 0,29 soit 26,4% du total | 0,09 soit 15,6% du total | 0,12 soit 11,9% du total | 0,063 soit 5,3% du total | 0,031 soit 2,8% du total | 0,08 soit 11,9% du total | 0,03 soit 4,5 % du total |
| Mode de distribution des rayons de pores en Å | 65 | 40-55 | 65-100 | 55 | 100 | 85 | 45 | 45 |

(1) mesuré à l'azote par la méthode BET;

(2) mesuré au porosimètre à mercure;

(3) mesuré au porosimètre à mercure.

## EXEMPLE 1

Cet exemple concerne l'hydrodémétallisation de la charge 1 à l'aide de l'alumine A selon l'invention non activée (essai 11) et activée (essai 12) à l'aide de diméthyldisulfure.

Les essais d'hydrodémétallisation ont été effectués dans un réacteur tubulaire contenant 50 cm³ de catalyseur parcouru de haut en bas par le mélange d'hydrogène et de la charge à co-courant.

On mesure les teneurs en nickel, en vanadium et en soufre restant dans l'effluent constitué par les hydrocarbures ayant 5 et plus de 5 atomes de carbone.

### Essai 11

On traite la charge avec l'alumine A non activée, dans les conditions suivantes:

- température: 390°C
- pression d'hygrogène: 140 bar
- rapport volumique $\frac{\text{hydrogène}}{\text{charge}}$: 700 normaux litres/litre
- vitesse spatiale horaire: 1 v.v.h

On obtient une activité constante de démétallisation et de désulfuration au bout de 50 heures, mais cette activité est très faible.

### Essai 12

Dans des conditions identiques à celles de l'Essai 11, on traite la charge avec de l'alumine A activée de la façon suivante: on établit à 150°C le débit de charge (1 v.v.h). On injecte simultanément du diméthyldisulfure (DMDS) à 250°C, dont la décomposition thermique donne de l'hydrogène sulfuré, et l'injection est conduite de manière telle que la pression partielle d'hydrogène sulfuré soit de 10 bar .

La température est élevée jusqu'à 390°C.

L'injection de DMDS est poursuivie jusqu'à l'obtention d'une activité constante de démétallisation et de désulfuration. Cette activité constante, obtenue au bout de 300 heures, demeure stable après arrêt de l'injection de DMDS.

Les autres conditions de l'Essai 12 sont par la suite les mêmes que celles de l'Essai 11.

Essai 13

Dans des conditions identiques à celles des essais 11 et 12, on traite la charge avec l'alumine A activée de la façon suivante. On envoie sur le catalyseur du gazole contenant du DMDS (à raison d'un pourcentage de DMDS de 2 % en poids); à la température ambiante, sous une pression d'hydrogène de 30 bar, avec une vitesse spatiale horaire de 1.

On élève la température à 300°C, on interrompt l'injection de DMDS et on monte la température à 390°C, on arrête l'introduction de gazole et on introduit la charge.

On obtient une activité constante au bout de 300 heures.

Résultats des Essais 11,12 et 13

Ces résultats figurent dans le tableau III ci-après.

TABLEAU   III

| ESSAI N° | Taux de désul-furation de la charge en % (1) | Taux d'élimination du vanadium de la charge en % (2) | Taux d'élimination du nickel de la charge en % (3) |
|---|---|---|---|
| 11 | 2 | 7 | 4 |
| 12 | 14 | 74 | 60 |
| 13 | 13 | 70 | 55 |

(1) Pourcentage de soufre éliminé de la charge

(2) Pourcentage de vanadium éliminé de la charge

(3) Pourcentage de nickel éliminé de la charge

Ce tableau permet de constater qu'avec un catalyseur selon l'invention activé avec du diméthyldisulfure, les résultats de l'hydrodémétallisation sont bien meilleurs.

EXEMPLE   2

Cet exemple concerne l'hydrodémétallisation de la charge 1 à l'aide de l'alumine A selon l'invention, du catalyseur C et de l'alumine témoin T1.

Les essais ont été conduits dans les mêmes conditions que les essais de l'exemple 1, à la différence près que la température était de 400°C.

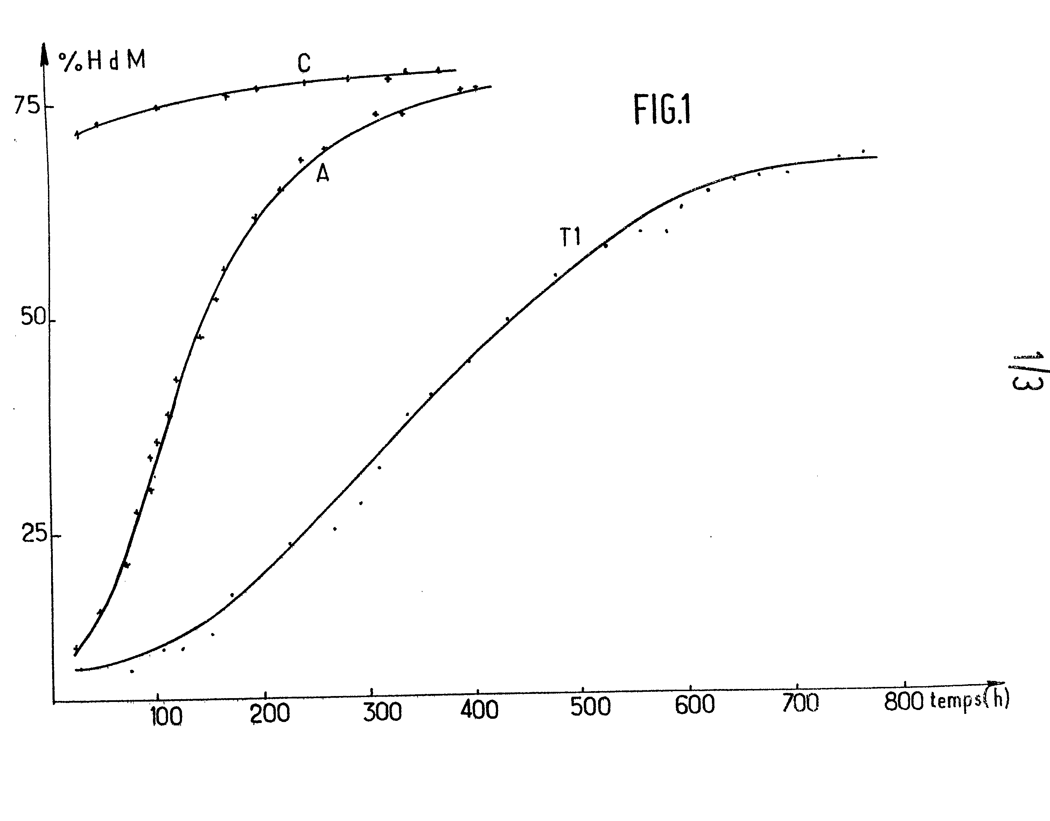

On a représenté sur la figure 1 des dessins annexés, le taux d'hydrodémétallisation (c'est-à-dire le pourcentage global de vanadium et de nickel éliminés de la charge= % HdM) en fonction du temps.

Cette figure 1 permet de constater:

- que l'alumine A selon l'invention à la température de 400°C est activée, contrairement à ce qui se passe à 390°C; à 390°C, le taux d'hydrodémétallisation maximum est de 5,5 %, alors qu'à 400°C il est de plus de 75 %;

- avec l'alumine A on obtient un taux d'hydrodémétallisation voisin de celui du catalyseur C;

- avec le catalyseur T1, le taux maximum d'hydrodémétallisation est plus faible et le temps pour atteindre le palier est plus long.

## EXEMPLE 3

Cet exemple concerne l'hydrodémétallisation de la charge 2 à l'aide de l'alumine A selon l'invention et d'alumines témoins T2, T3, T4, T5, T6 et T7.

Les essais ont été conduits dans les mêmes conditions que les essais de l'exemple 2.

On obtient avec l'alumine un taux d'hydrodémétallisation supérieur à 85 % au bout de 100 heures. Pour les autres alumines, les taux d'hydrodémétallisation sont inférieurs à 5 % au bout de 200 heures.

## EXEMPLE 4

### Essais 41 - 42 - 43 - 44

On traite la charge 1 avec de l'alumine A activée de la même façon que dans l'essai 12, mais en faisant varier la pression d'hydrogène sulfuré en variant l'injection de DMDS. Après un temps de stabilisation de 300 heures, les activités à 390°C et à 110 bar de pression partielle d'hydrogène sont données dans le tableau IV ci-après.

TABLEAU IV

| ESSAI N° | Pression d'hydrogène sulfuré en bar | Taux d'élimination du vanadium en % |
|----------|-------------------------------------|-------------------------------------|
| 41 | 0 | 63 |
| 42 | 10 | 72 |
| 43 | 16 | 77 |
| 44 | 20 | 77 |

On constate que le taux de démétallisation augmente
avec la pression partielle d'hydrogène sulfuré; au-delà
d'une limite (voisine de 16 bar d'hydrogène sulfuré), il
n'est plus nécessaire d'augmenter cette pression partielle.
Il est entendu que cette limite peut varier avec la nature
de la charge et les conditions opératoires.

EXEMPLE 5

Cet exemple concerne l'hydrotraitement de la charge 2 à
l'aide de l'alumine A.

L'alumine A est activée dans les mêmes conditions opératoires que dans l'exemple 2. Lorsque le palier d'activité
est atteint, au bout de 100 heures, les conditions opératoires suivantes sont établies:

- température: 405°C,
- pression d'hydrogène: 140 bar,

- vitesse spatiale horaire: 0,5,
- rapport volumique $\frac{\text{hydrogène}}{\text{charge}}$ : 700 normaux litres/litres.

On mesure les teneurs en nickel, en vanadium, en soufre et en résidu Conradson dans l'effluent constitué par les hydrocarbures ayant 5 et plus de 5 atomes de carbone.

La conversion en % en poids en fraction dont le point d'ébullition est inférieur à 525°C, $C^{525°C}$, est calculée à partir des données de distillation simulée et est exprimée par le rapport:

$$C^{525°C} = \frac{B - A}{C} \times 100$$

où

A = fraction de la charge dont le point d'ébullition est inférieur à 525°C,

B = fraction de l'effluent dont le point d'ébullition est inférieur à 525°C,

C = fraction de la charge dont le point d'ébullition est supérieur à 525°C.

Les résultats obtenus figurent dans le tableau V ci-après.

TABLEAU   V

| Taux d'hydro-désulfuration de la charge (1) | Taux d'hydro-démétallisation de la charge (2) | Taux de réduction du carbone Conradson de la charge (3) | Conversion 525°C |
|---|---|---|---|
| 55 | 98,5 | 52 | 59 |

(1) Pourcentage de soufre éliminé de la charge

(2) Pourcentage de vanadium et de nickel éliminés de la charge

(3) Pourcentage de réduction de carbone Conradson de la charge.

## EXEMPLE 6

Cet exemple concerne l'hydrotraitement de la charge 1 à l'aide de l'alumine A.

On traite la charge avec l'alumine A dans les conditions suivantes:

- température: 410°C,
- pression d'hydrogène: 140 bar,
- vitesse spatiale horaire: 1,
- rapport volumique $\frac{\text{hydrogène}}{\text{charge}}$ : 700 normaux litres/litre.

L'essai a été poursuivi jusqu'à atteindre un palier d'activité à 250 heures environ.

On effectue sur l'effluent les mêmes mesures que dans l'exemple 5, avec, en plus, des mesures du taux d'asphaltènes.

Les résultats obtenus figurent dans le tableau VI ci-après.

### TABLEAU VI

| Taux d'hydro-désulfuration de la charge (1) | Taux d'hydro-démétallisation de la charge (2) | Taux de réduction des asphaltènes de la charge (3) | Taux de réduction du carbone Conradson de la charge (4) | Conversion 525°C |
|---|---|---|---|---|
| 23 | 80 | 69 | 39 | 35 |

(1) Pourcentage de soufre éliminé de la charge

(2) Pourcentage de vanadium et de nickel éliminés de la charge

(3) Pourcentage de réduction du taux d'asphaltènes de la charge

(4) Pourcentage de réduction du carbone Conradson de la charge.

On constate, d'après ce tableau, que la démétallisation s'accompagne d'une désulfuration, d'une réduction des taux d'asphaltènes et du carbone Conradson et d'une conversion de la charge.

## EXEMPLE   7

Cet exemple concerne l'hydrodémétallisation de la charge 3 à l'aide de l'alumine A.

On traite la charge dans les conditions suivantes:

- pression d'hydrogène: 140 bar,
- vitesse spatiale horaire: 0,5,
- rapport volumique $\dfrac{\text{hydrogène}}{\text{charge}}$ : 1000 normaux litres/litre.

La température est ajustée pour maintenir un taux d'hydro-démétallisation de 80 %.

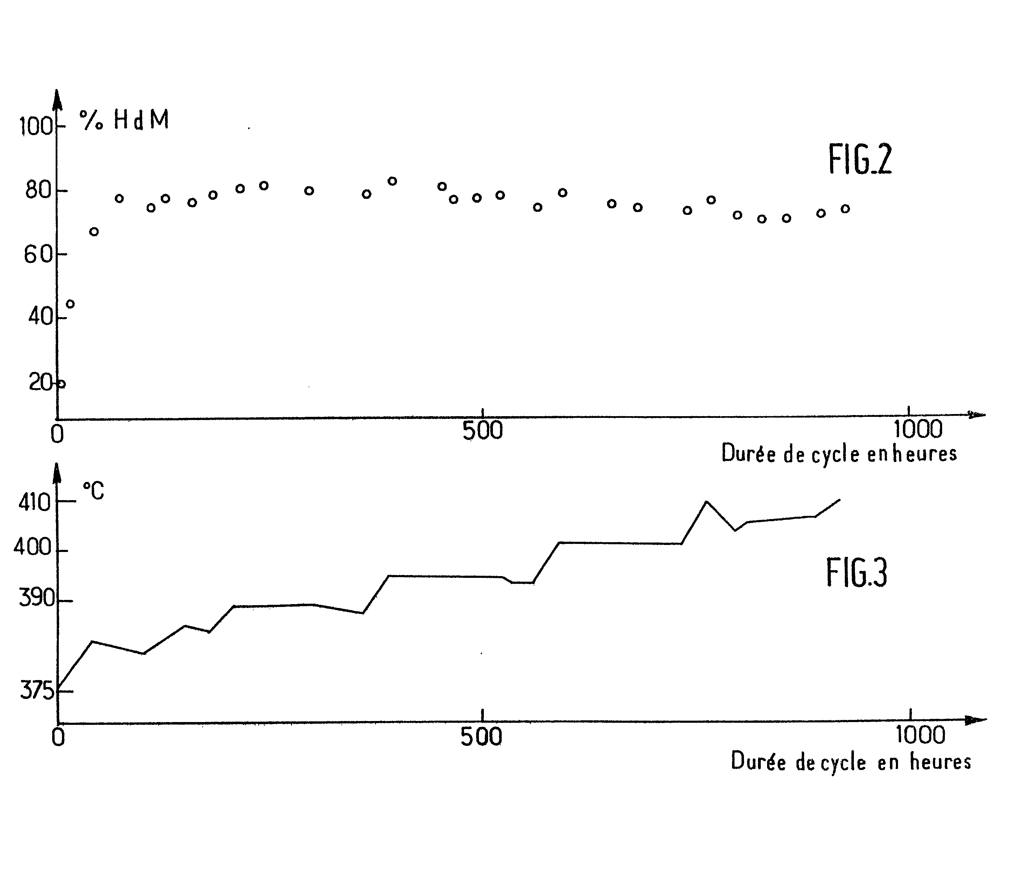

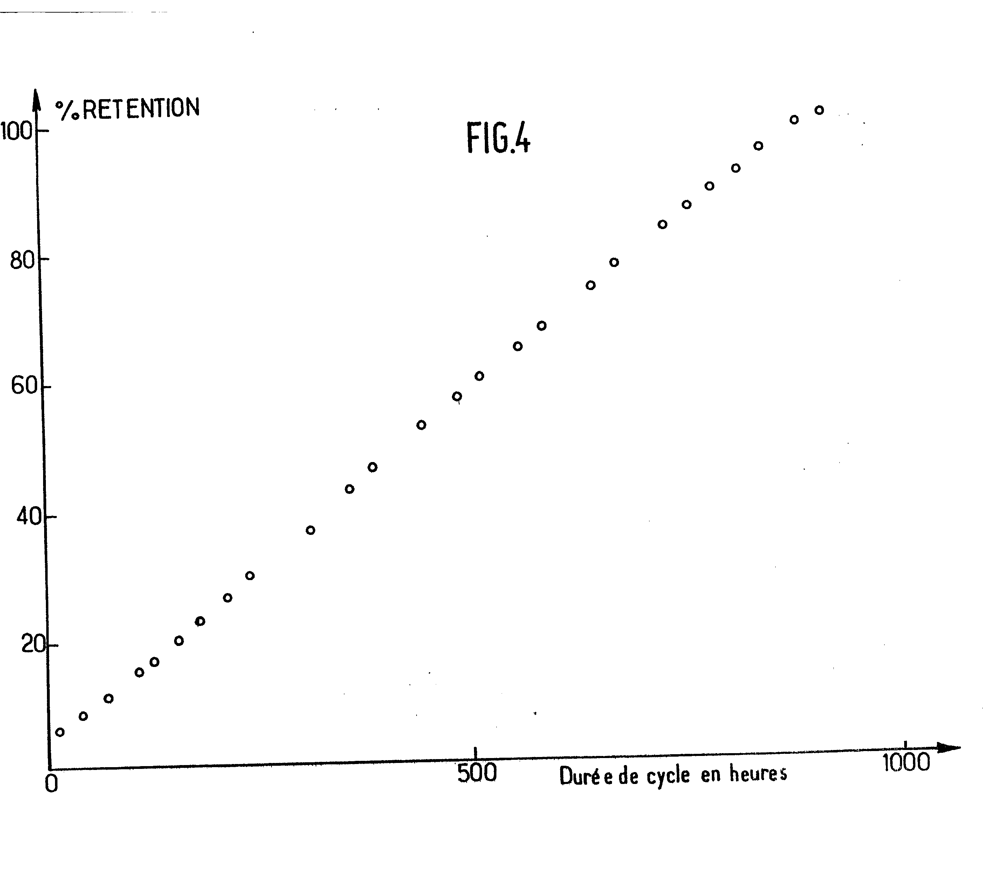

Les résultats sont représentés sur les figures 2, 3 et 4.

La figure 2 représente l'évolution du pourcentage d'hydro-démétallisation (% HDM) au cours du cycle.

La figure 3 représente l'évolution de la température au cours du cycle.

La figure 4 représente l'évolution du pourcentage de rétention au cours du cycle. La rétention est le cumul du poids de métaux (nickel + vanadium) enlevés à la charge. La rétention est exprimée en grammes pour 100 grammes d'alumine chargée au départ dans le réacteur.

On constate que la rétention est supérieure à 100 % à 410°C, à comparer avec les 45 % obtenus selon le brevet français n° 2 357 635 (voir page 9 de ce brevet), dans des conditions voisines du présent exemple, c'est-à-dire:

- température : 410°C,
- pression d'hydrogène: 150 bar,
- vitesse spatiale horaire: 2,1.

L'alumine selon l'invention a donc des performances bien supérieures.

Revendications

1. Procédé d'hydrotraitement d'une charge d'hydrocarbures caractérisé en ce que, dans des conditions usuelles d'hydrotraitement, ladite charge est mise en contact avec un catalyseur constitué essentiellement par une alumine dont les caractéristiques sont les suivantes:

- surface spécifique: supérieure à 150 $m^2$/g et de préférence à 175 $m^2$/g,
- volume poreux: supérieur à 0,6$cm^3$/g et de préférence à 0,7$cm^3$/g,
- distribution du volume poreux en fonction du rayon de pore : au moins 50 % de pores de rayon au plus égal à 100 $\overset{o}{A}$ et moins de 10 % de pores de rayon supérieur ou égal à 1000 $\overset{o}{A}$,
- mode de distribution des rayons de pores en $\overset{o}{A}$(maximum de la courbe de distribution des rayons de pores): rayons com-pris entre 40 et 70 $\overset{o}{A}$,

ladite alumine ayant été activée préalablement à la mise en oeuvre dudit procédé, pendant une période initiale d'activation, et étant éventuellement activée pendant ledit procédé, à l'aide d'un composé soufré.

2. Procédé selon la revendication 1, caractérisé en ce que le composé soufré utilisé pour l'activation de l'alumine est choisi dans le groupe constitué par l'hydrogène sulfuré et les sulfures organiques, comme le diméthyldisulfure.

3. Procédé selon l'une des revendications 1 ou 2, caractérisé en ce que le composé soufré provient d'une source extérieure.

4. Procédé selon l'une des revendications 1 ou 2, caractérisé en ce que le composé soufré est présent dans la charge.

5. Procédé selon l'une des revendications 1 à 4, caractérisé en ce que le composé soufré provient d'une réaction de désulfuration de la charge effectuée en combinaison avec l'hydrotraitement.

6. Procédé selon l'une des revendications 1 à 4, caractérisé en ce que le composé soufré est généré in situ par décomposition d'un composé soufré ajouté à la charge.

7. Procédé selon l'une des revendications 1 ou 2, caractérisé en ce que le composé soufré est généré in situ par décomposition d'autres composés soufrés présents dans la charge.

8. Procédé selon l'une des revendications 1 à 7, caractérisé en ce que ledit catalyseur est utilisé seul.

9. Procédé selon la revendication 5, caractérisé en ce que ledit catalyseur est utilisé en combinaison avec un catalyseur d'hydrodésulfuration.

10. Procédé selon la revendication 9, caractérisé en ce que ledit catalyseur est utilisé en mélange avec un catalyseur d'hydrodésulfuration.

11. Procédé selon la revendication 9, caractérisé en ce que l'alumine constituant le catalyseur d'hydrotraitement est chargée dans la partie aval d'un réacteur d'hydrotraitement, la partie amont étant occupée par un catalyseur d'hydro désulfuration.

12. Procédé selon la revendication 9, caractérisé en ce que l'alumine de départ est chargée dans le premier réacteur d'un train de plusieurs réacteurs, dont les autres réacteurs contiennent un catalyseur d'hydrodésulfuration, et en ce qu'au moins une fraction du gaz issu du train de réacteurs est recyclée à l'entrée du premier réacteur pendant tout ou partie du cycle d'hydrotraitement.

0122180

13. Procédé selon l'une des revendications 1 à 12, caractérisé en ce que, pendant la période initiale d'activation, l'effluent sortant de l'hydrotraitement est recycle à la charge.

14. Procédé selon l'une des revendications 1 à 13, caractérisé en ce que, pendant la période initiale d'activation, on effectue l'hydrotraitement d'une charge très polluée en métaux.

15. Application du procédé selon l'une des revendications 1 à 14 à l'hydrodémétallisation d'une charge d'hydrocarbures.

16. Application du procédé selon l'une des revendications 1 à 14 à l'hydrodémétallisation et à la réduction du carbone Conradson d'une charge d'hydrocarbures.

17. Application du procédé selon l'une des revendications 1 à 14 à l'hydrodémétallisation convertissante d'une charge d'hydrocarbures.

18. Application du procédé selon l'une des revendications 1 à 14 à l'hydrodémétallisation et à la réduction de la teneur en asphaltènes d'une charge d'hydrocarbures.

19. Application du procédé selon l'une des revendications 1 à 14 à l'hydrodémétallisation et à l'hydrodésulfuration d'une charge d'hydrocarbures.

20 Catalyseur d'hydrotraitement de charges d'hydrocarbures utilisable pour la mise en oeuvre du procédé selon l'une des revendications 1 à 14 et son application selon l'une des revendications 16 à 18, caractérisé en ce qu'il est constitué essentiellement par une alumine dont les caractéristiques sont les suivantes:
- surface spécifique: supérieure à 150 m²/g et, de préférence, à 175 m²/g,

- 24 -

0122180

- volume poreux: supérieur à 0,6 $cm^3/g$ et, de préférence à 0,7 $cm^3/g$,
- distribution du volume poreux en fonction du rayon de pore: au moins 50 % de pores de rayon au plus égal à 100 $\overset{o}{A}$,
- mode de distribution des rayons de pores en $\overset{o}{A}$ (maximum de la courbe de distribution des rayons de pores): rayons compris entre 40 et 70 $\overset{o}{A}$,

ladite alumine ayant été activée préalablement à la mise en oeuvre dudit hydrotraitement pendant une période initiale d'activation et étant éventuellement active pendant ledit procédé à l'aide d'un composé soufré.

FIG.1

FIG.2

% H d M

Durée de cycle en heures

FIG.3

°C

Durée de cycle en heures

2/3

0122180

FIG.4

% RETENTION

Durée de cycle en heures

3/3

0122180

**Office européen des brevets**

## RAPPORT DE RECHERCHE EUROPEENNE

Numéro de la demande

EP  84  40  0515

### ·· DOCUMENTS CONSIDERES COMME·PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | US-A-4 024 231  (W.C. ZIEGENHEIN) <br> * Abrégé; colonne 1, ligne 49 - colonne 2, ligne 3; revendications 1-6 * | 1,8,20 | B 01 J  21/04 <br> C 10 G  65/04 <br> C 10 G  45/04 <br> B 01 J  37/20 <br> B 01 J  35/10 |
| Y | US-A-4 111 796  (S.J. YANIK) <br><br> * Abrégé; colonne 1, ligne 5 - colonne 3, ligne 44; revendications 1-6 * | 1-8,12 ,20 | |
| D,Y | FR-A-2 357 635  (SHELL) <br> * Pages 1-6; revendications 1-15 * | 1-20 | |
| A | US-A-4 016 067  (FISHER et al.) <br><br> * Figure; abrégé; colonne 3, ligne 62 - colonne 5, ligne 21; revendications 1-9 * | 1,10- 20 | |
| A | GB-A-2 040 898 (NIKKI-UNIVERSAL) <br> * Abrégé; page 1, lignes 54-114; revendications 1-8 * | 1,8 | |
| A | US-A-4 297 242  (HENSLEY et al.) | | |
| A | US-A-2 952 644  (D.L. HOLDEN) | | |

**DOMAINES TECHNIQUES RECHERCHES (Int. Cl. 3)**

B 01 J
C 10 G

Le présent rapport de recherche a été établi pour toutes les revendications

| Lieu de la recherche | Date d'achèvement de la recherche | Examinateur |
|---|---|---|
| LA HAYE | 03-07-1984 | LO CONTE C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant